# EUROPÄISCHE PATENTSCHRIFT

(11) **EP 1 444 068 B1**
(45) Veröffentlichungstag und Bekanntmachung des Hinweises auf die Patenterteilung: **15.04.2009**
(21) Anmeldenummer: 02802984.1
(22) Anmeldetag: 28.10.2002
(51) Int. Cl.: B23D 61/18

(54) **SÄGEGARN**
SAWING WIRE
FIL A SCIER

(30) Priorität: 13.11.2001 EP 01811090; 26.09.2002 EP 02405834
(43) Veröffentlichungstag der Anmeldung: 11.08.2004
(73) Patentinhaber: sia Abrasives Industries AG, 8501 Frauenfeld (CH)
(72) Erfinder: JENTGENS, Christian, 8360 Wallenwil (CH)
(74) Vertreter: Hepp, Dieter
(86) Internationale Anmeldenummer: PCT/EP2002/012002
(87) Internationale Veröffentlichungsnummer: WO 2003/041899

(56) Entgegenhaltungen:
- EP-A- 0 680 813
- EP-A- 1 025 942
- DE-A- 2 820 014
- FR-A- 1 142 604
- US-A- 5 068 142
- PATENT ABSTRACTS OF JAPAN vol. 1996, no. 09, 30. September 1996 (1996-09-30) -& JP 08 126953 A (SHIN ETSU HANDOTAI CO LTD), 21. Mai 1996 (1996-05-21)
- PATENT ABSTRACTS OF JAPAN vol. 1998, no. 11, 30. September 1998 (1998-09-30) -& JP 10 151559 A (KITAMURA ATSUSATO), 9. Juni 1998 (1998-06-09) in der Anmeldung erwähnt
- PATENT ABSTRACTS OF JAPAN vol. 2000, no. 03, 30. März 2000 (2000-03-30) -& JP 11 347911 A (TANI YASUHIRO;RICOH CO LTD), 21. Dezember 1999 (1999-12-21)

## Beschreibung

Die vorliegende Erfindung betrifft ein Sägegarn, ein Verfahren zu seiner Herstellung sowie dessen Verwendung zum Schneiden bzw. Teilen von harten Werkstoffen wie beispielsweise monokristallinem Silicium.

Dünne Scheiben aus sprödharten Materialien finden in zahlreichen technischen Bereichen Anwendung. Als prominentes Beispiel sei nur die Verwendung sogenannter Silicium-Wafer in der Halbleitertechnologie erwähnt. Derartige Scheiben werden in der Regel aus Blöcken oder Einkristallen der entsprechenden Materialien durch Schneide- oder Trennvorgänge gewonnen. Herkömmlich werden diese Schneide- oder Trennvorgänge unter Verwendung eines Sägedrahts aus Stahl in Gegenwart eines Schleifmittels durchgeführt. In der Regel wird das Schleifmittel in Form einer losen Aufschlämmung während des Schneidevorgangs auf den Sägedraht gebracht, um das Schneiden des Werkstoffs zu ermöglichen. Eine derartige Vorrichtung ist beispielhaft in der US-4,187, 828 gezeigt. Dieses herkömmliche Verfahren leidet jedoch unter dem Nachteil, dass sich der Sägedraht während des Arbeitsvorgangs stark abnutzt und in der Regel nur einmal verwendet werden kann. Zudem fallen bei der Verwendung von losen Aufschlämmungen von Schleifmaterial in nicht unerheblichem Masse nicht recyclebare Abfälle an.

Es hat daher Bemühungen gegeben, den Sägedraht durch direktes Aufbringen des Schleifmittels auf dessen Oberfläche widerstandsfähiger zu machen. So ist in der EP-A-0 982 094 ein Sägedraht beschrieben, bei der ein Sägedraht aus Stahl über eine haftvermittelnde Zwischenschicht mit einer metallischen Bindephase verbunden ist, in der das Schleifmittel, beispielsweise Diamantkörner, eingelagert ist. Eine ähnliche Drahtsäge ist auch in der US-4,485,757 beschrieben. Derartige Sägedrahte sind aber im Herstellungsprozess kostspielig. Zudem leiden sie oft unter dem Problem der Wasserstoffversprödung und daraus resultierenden Spontanbrüchen.

In der JP-A-207598 ist ein Sägedraht beschrieben, der aus einem Pianodraht und Schleifpartikeln besteht, die auf der Oberfläche des Drahts mittels eines bestimmten Bindemittels befestigt sind. Das Bindemittel ist aufgrund der Zugabe von Additiven wie Metallteilchen widerstandsfähiger gegen äussere Einflüsse. In der US-5, 313, 742 sind Schneideräder beschrieben, die aufgrund ihres einstückigen Aufbaus mit einer grösseren Dicke im mittleren, nichtschneidenden Bereich und einer geringeren Dicke in den äusseren Schneidebereichen eine erhöhte Festigkeit aufweisen. Das Schneiderad besteht aus einem Bindeharz, in das Schleifpartikel gemischt sind.

Die vorstehend beschriebenen Schneidewerkzeuge erfüllen die an sie gestellten Anforderungen hinsichtlich der Verwendung zum Schneiden von hartspröden Werkstoffen jedoch nicht optimal. Gerade bei teuren Werkstoffen wie einkristallinem Silicium sollten die Schnittbreiten sehr gering sein, um den Schnittverlust so klein wie möglich zu halten. Naturgemäss erhöht sich der Durchmesser des Schneidewerkzeugs durch Auftragen einer das Schleifmittel enthaltenden Schicht auf den Draht, wodurch die Schnittbreite erhöht wird. Bei Verwendung von Schleifmittel in Form einer losen Aufschlämmung muss mit hohen Schnittgeschwindigkeiten von etwa 1000 m/min gearbeitet werden, um ein Mitreissen der Schleifpartikel und somit einen Schnitt zu erreichen. Das führt zu einem starken Temperaturanstieg und macht eine Wasserkühlung während des Schneideprozesses unumgänglich. Bei Verwendung von Diamant als Schleifmaterial kommt es aufgrund des sehr guten Wärmeleitfähigkeitseigenschaften dieses Materials selbst bei Wasserkühlung zu lokal stark erhöhten Temperaturen und somit zu einer erheblichen Belastung für das Schneidewerkzeug und einem daraus resultierenden schnelleren Verschleiss. Ist das Schleifmittel auf der Oberfläche des Schneidewerkzeugs befestigt, wird das Schneidewerkzeug nach Abtragung dieser Oberflächenschicht unbrauchbar, was aufgrund der vorstehend beschriebenen Bedingungen während des Schneidens hartspröder Werkstoffe sehr schnell geschieht.

Verbundmaterialien mit einem Kern aus Fasermaterial und einer dieses Fasermaterial umfüllenden Polymermatrix sind grundsätzlich bekannt. Beispielsweise ist in der US-5, 068142 ein derartiges faserverstärktes Verbundmaterial zur Verwendung im Baugewerbe beschrieben, beispielsweise zur Verhinderung von Erdrutschen. Dieses Verbundmaterial besteht aus einer Vielzahl von Fasern und weist eine Gesamtdicke im Bereich von mehreren Millimetern oder mehr auf.

In der WO 93/18891 ist eine Bürste zum Polieren von Oberflächen beschrieben, welche aus einem thermoplastischen Polymer mit darin befindlichen Schleifpartikeln besteht. Es wird aber in dieser Schrift ausdrücklich darauf hingewiesen, dass die dort beschriebenen Strukturen sich insbesondere hinsichtlich der Zugfestigkeit von Strukturen unterscheiden, bei denen ein vorgeformtes Kernmaterial nachträglich mit einer Beschichtung aus mit Schleifmittel gefülltem thermoplastischen Elastomer überzogen wird. Es ist nicht beschrieben, dass die dort aufgeführten Filamente zum Schneiden von hartspröden Materialien verwendet werden können.

In der JP-A-10-151559 ist eine Drahtsäge beschrieben, die zum mehrmaligen Schneiden unter Wasserkühlung geeignet ist. Diese Säge besteht aus einem Multifilament-Garn, auf dessen Oberfläche und in dessen Innern Schleifmittel bereitgestellt ist. Das Schleifmittel ist mittels eines besonderen Bindeharzes auf der Basis von Polytetrafluorethylen als unverzichtbarem Bestandteil mit dem Multi-Filament verbunden. Das Schleifmittel-/ Bindemittelgemisch wird in Form einer Dispersion auf das Multifilament aufgetragen. Dies macht einen nachträglichen Evaporationsschritt erforderlich, bei dem es zur Bläschenbildung kommt. Eine exakte zylindrische Form des Sägedrahts ist somit nicht erhältlich. Zudem ist der Einsatz von fluorhaltigen Bindemitteln aus ökologischen und toxikologischen Gründen bedenklich.

In der FR-A-1 142 604 ist grundsätzlich die Einsetzbarkeit von Kunststoffen als Material für Sägedrähte beschrieben. In dieser Schrift ist aber lediglich ein Sägedraht mit maximal 3 Kunststofffasern erläutert. Die Verwendung eines für die Sägeanwendungen der vorliegenden Erfindung erfordelrichen Multifilaments ist nicht offenbart.

Es bestand daher die Aufgabe der vorliegenden Erfindung, ein Schneidewerkzeug bereitzustellen, mit welchem die vorstehend beschriebenen Nachteile aus dem Stand der Technik überwunden werden können.

Die vorstehende Aufgabe wird erfindungsgemäss durch ein Sägegarn gelöst, umfassend eine Schleifmischung enthaltend ein Bindeharz und Schleifmaterial, sowie ein Multi-Filament aus 200 bis 1000 reissfesten Fasern, welche vorzugsweise im wesentlichen parallel zueinander angeordnet und von der Schleifmischung umhüllt sind, wobei der Raum zwischen den Fasern mit der Schleifmischung gefüllt ist, wobei das Bindeharz kein Polytetrafluorethylen enthält.

Ein weiterer Aspekt der vorliegenden Erfindung betrifft ein Sägegarn, umfassend eine Schleifmischung enthaltend ein Bindeharz und Schleifmaterial, sowie ein Multi-Filament aus reissfesten Fasern, welche vorzugsweise im wesentlichen parallel zueinander angeordnet und von der Schleifmischung umhüllt sind, wobei der Raum zwischen den Fasern mit der Schleifmischung gefüllt ist, dadurch gekennzeichnet, dass die Menge an Schleifmaterial in der Schleifmischung von der Oberfläche des Sägegarns zum Inneren hin graduell abnimmt. Mit anderen Worten befinden sich bei diesem Sägegarn mehr Schleifmaterialteilchen an der Oberfläche als im Innern. Unter einer graduellen Abnahme der Menge an Schleifmaterial soll gemäss der vorliegenden Erfindung verstanden werden, dass die Menge an Scheifmaterial von der Oberfläche des Garns zu dessem Inneren hin im wesentlichen kontinuierlich abnimmt. Gewisse Abweichungen der Kontinuität, beispielsweise Abweichungen von etwa 10%, können sich aus dem Herstellungsprozess ergeben. Erfindungsgemäss bevorzugt nimmt die Menge an Schleifmaterial im Sägegarn von der Oberfläche zum Innern hin nach einer Strecke von 30 µm um jeweils 2-60%, vorzugsweise um 5-40%, besonders bevorzugt um 5-20% ab. Auch bei diesem Aspekt der vorliegenden Erfindung enthält vorzugsweise das Bindeharz kein Polytetrafluorethylen.

Gemäss einer bevorzugten Ausführungsform der vorliegenden Erfindung weist das Sägegarn eine Dicke von gleich oder weniger als 350 µm auf.

Gemäss einer bevorzugten Ausführungsform der vorliegenden Erfindung weist das Sägegarn eine Dicke von 125-300 µm auf.

Gemäss der vorliegenden Erfindung wird unter Multi-Filament ein Verbundmaterial verstanden, dass aus vielen einzelnen Fasern aufgebaut ist.

Überraschend wurde gefunden, dass die erfindungsgemässen Sägegarne sich hervorragend zum Schneiden von hartspröden ' Materialien eignen. Durch die Verwendung von vergleichsweise wenig Fasern im Bereich von 200-1000 Fasern, vorzugsweise 200-800 Fasern, weist das Verbundmaterial einen Durchmesser von etwa 125 bis 350 µm auf, wodurch Schnittbreiten von weniger oder gleich 350 µm erreicht werden können. Im Gegensatz zu den Schneidewerkzeugen aus dem Stand der Technik, bei denen lediglich auf der Oberfläche eines Metalldrahts eine schleifmittelhaltige Schicht vorhanden ist und die folglich nach Abnutzung dieser Oberfläche unbrauchbar werden, ist bei dem erfindungsgemässen Sägegarn eine Schleifmischung zwischen den einzelnen Fasern vorhanden. Bei Abrieb der Oberfläche des Sägegarns wird somit während des Arbeitsvorgangs neues Schleifmittel im Innern des Schleifgrans freigelegt, welches das ursprünglich an der Oberfläche befindliche und durch Verschleiss verlorengegangene Schleifmittel ersetzen kann. Mit dem erfindungsgemässen Sägegarn lassen sich somit deutlich erhöhte Standzeiten beim Schneiden von hartspröden Materialien erreichen.

Zudem kann das Schneiden hartspröder Materialien mit den erfindungsgemässen Sägegarnen bei niedrigeren Schnittgeschwindigkeiten durchgeführt werden. Dadurch wird die Belastung des Schneidewerkzeugs aufgrund von während des Schneidens auftretenden erhöhten Temperaturen verringert. Zudem wird eine sorgfältigere Verfahrensführung möglich, welche präzisere Schnitte mit weniger Schnittverlust erlaubt. Eine Zuführung einer losen Aufschlämmung von Schleifmaterial ist nicht notwendig.

Zudem ist das erfindungsgemässe Sägegarn im Gegensatz zu dem Sägegarn aus der JP-A-10 151 559 nicht auf ein Bindeharz beschränkt, das Polytetrafluorethylen als unverzichtbaren Bestandteil enthält und daher nicht die hiermit verbundenen ökologischen und toxikologischen Nachteile aufweist.

Weiterhin kann gemäss der vorliegenden Erfindung ein Sägegarn erhalten werden, dass eine exakte zylindrische Form aufweist. Somit hat das erfindungsgemässe Sägegarn deutlich bessere Schneideeigenschaften.

Das erfindungsgemässe Sägegarn, ist wie nachstehend geschildert, auf einfache und kostengünstige Weise darstellbar.

Die vorliegende Erfindung wird nachstehend anhand von veranschaulichenden und nicht einschränkenden Zeichnungen näher erläutert. Es zeigt:

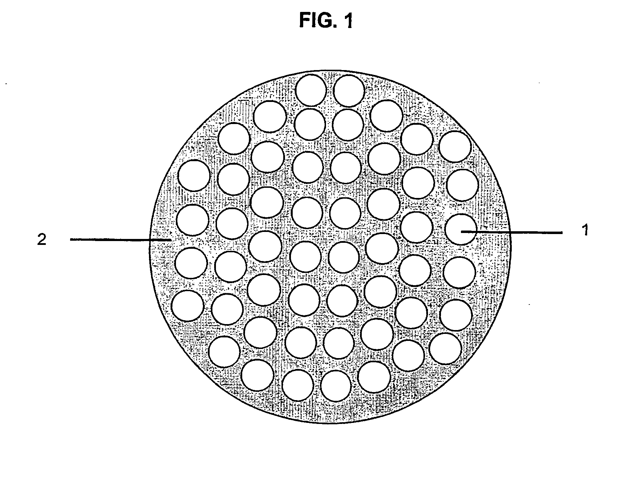

- FIG. 1: einen Querschnitt durch ein erfindungsgemässes Sägegarn.

Wie in Fig. 1 gezeigt umfasst das erfindungsgemässe Sägegarn ein Multi-Filament aus reissfesten Fasern (1), welche in einer Schleifmischung (2) eingebettet im wesentlichen parallel zueinander angeordnet sind und durch die Schleifmischung (2) voneinander getrennt sind. Das erfindungsgemässe Sägegarn umfasst 200 bis 1000, vorzugsweise 200 bis 800 einzelne Fasern (1). Daraus ergibt sich eine Dicke des Sägegarns von gleich oder weniger als 350 µm, vorzugsweise 125-300 µm. Die Fasern weisen vorzugsweise einen im wesentlichen runden Querschnitt auf, wobei andere Formen erfindungsgemäss ebenfalls möglich sind.

Die Fasern (1) können aus Materialien gefertigt sein, die zur Herstellung von faserverstärkten Werkstoffen eingesetzt werden. Beispielsweise seien Fasern aus m- und/oder p-Aramid (aromatisches Polyamid), ultrahochfestem Polyethylen, hochorientiertem Polyester, Polyester, Polyamid, Kohlefasern oder Glasfasern sowie Litzendrähte genannt. Erfindungsgemäss bevorzugt ist die Verwendung von Fasern aus m-Aramid, welche von den Firma Du Pont unter der Marke Nomex^{®} und von der Firma Teijin unter der Marke Teijincone^{®} vertrieben werden, und/oder p-Aramid, welche von der Firma Du Pont unter der Marke Kevlar^{®}, von der Firma Twaron unter der Marke Twaron^{®} und von der Firma Teijin unter der Marke Technora^{®} vertrieben werden, und/oder von Fasern aus ultrahochfestem Polyethylen, welche von der Firma Toyobo unter der Marke Dyneema^{®} vertrieben werden. Erfindungsgemäss besonders bevorzugt ist die Verwendung von Fasern aus p-Polyphenylen-2,6-benzobisoxazol, welche von der Firma Toyobo unter der Marke Zylon^{®} vertrieben werden. Erfindungsgemäss können aber auch Kombinationen aller vorstehend genannten Materialien als Fasermaterial für die erfindungsgemässen Sägegarne eingesetzt werden.

Die Fasern (1) müssen eine Reissfestigkeit aufweisen, welche den Anforderungen des Prozesses des Schneidens von hartspröden Werkstoffen genügt. Gemäss der vorliegenden Anmeldung soll daher unter einer reissfesten Faser eine Faser verstanden werden, welche eine Zugfestigkeit (tensile strength) von mehr als 25 cN/tex bzw. mehr als 300 MPa aufweist. Die vorstehend aufgeführten Fasermaterialien erfüllen diese Anforderung.

Aufgrund der niedrigeren Schnittgeschwindigkeiten, die bei Verwendung des erfindungsgemässen Sägegarns zum Schneiden von hartspröden Materialien erforderlich sind, können auch Materialien zur Herstellung des Sägegarns eingesetzt werden, die für herkömmliche Schneidewerkzeuge aufgrund der bei deren Verwendung auftretenden hohen Temperaturen ungeeignet wären.

Wie aus Fig. 1 ersichtlich sind die Fasern (1) im wesentlichen parallel zueinander in eine Schleifmischung (2) eingebettet. Die Schleifmischung (2) enthält ein Bindeharz und Schleifmaterial. Das Bindeharz kann erfindungsgemäss ein Festharz oder ein Flüssigharz sein. Es kann sich hierbei um bekannte thermoplastische oder duroplastische Polymere oder eine Kombination dieser Materialien handeln, mit Ausnahme der insbesondere ökologisch und toxikologisch bnachteiligen fluorhaltigen Bindemittel. Beispielsweise seien Thermoplaste wie Polyimide, Polybenzimidazole, Polycarbonate, Polyethylenterephthalate, Polybutylenterephthalate, Polyamide, Polyphenylenether, Polyphenylensulfide, Polyaryletherketone, Polyetheretherketone oder Duroplaste wie beispielsweise härtbare Phenolharze, härtbare Phenol-Formaldehyd-Harze, Polyimidharze, Bismaleinimide, Epoxidharze, ungesättigte Polyesterharze, DAP-Harze (Polydiallylphthalat), MF-Formmassen wie beispielsweise Melamin-Formaldehyd-Formmassen, härtbare Melamin-Phenol-Formaldehyd-(MPF)-Formmassen oder vernetzte Polyurethane genannt. Bevorzugte Materialien sind hierbei von den Thermoplasten Polyethylenterephthalate, Polybutylenterephthalate, Polycarbonate oder Polyamide, während von den Duroplasten insbesondere härtbare Phenolharze, Epoxidharze, härtbare Phenol-Formaldehyd-Harze, MF-Formmassen wie beispielsweise Melamin-Formaldehyd-Formmassen und härtbare Melamin-Phenol-Formaldehyd-(MPF)-Formmassen bevorzugt sind. Erfindungsgemäss sind duroplastische Materialien besonders bevorzugt. Gemäss der vorliegenden Erfindung können auch Gemische der vorstehenden Substanzen als Bindeharz verwendet werden.

Das Bindeharz enthält das Schleifmaterial in dispergierter Form. Erfindungsgemäss bevorzugt handelt es sich hierbei um feinklassierten Diamant, Siliciumcarbid (SiC), Al₂O₃, sowie die sogenannten Super-Abrasives wie kubisches Bornitrid (c-BN), TiC, ZrC, HfC, Gemische aus diesen Carbiden, TiN, ZrN, HfN, oder Gemische aus diesen Nitriden. Erfindungsgemäss bevorzugt ist die Verwendung von feinklassiertem Diamant als Schleifmaterial. Die Schleifpartikel haben vorzugsweise eine Grösse von 1 bis 25 µm, besonders bevorzugt 5 bis 20 µm. Gemäss der vorliegenden Erfindung können auch Gemische der vorstehenden Substanzen als Schleifpartikel verwendet werden.

Die Schleifmischung umfasst gemäss der vorliegenden Erfindung 0,1 Gew.-% bis 60 Gew.-%, vorzugsweise 20 Gew.-% bis 40 Gew.-% Schleifmaterial, bezogen auf das Gesamtgewicht der Schleifmischung.

Je nach gewünschter Anwendung beträgt dass Gewichtsverhältnis von Fasern zu Schleifmischung 4:1 bis 1:4. Der Fachmann kann das Gewichtsverhältnis problemlos unter Berücksichtigung der erforderlichen Eigenschaften des Sägegarns optimieren.

Die Schleifmischung kann weiterhin herkömmliche Additive wie Trennmittel, Gleitmittel, Füllstoffe, Pigmente, Haftvermittler, Stabilisatoren, Inhibitoren oder Beschleunigersysteme enthalten. Diese Additive sind dem Fachmann grundsätzlich bekannt und können von diesem entsprechend dem Anforderungsprofil des Sägegarns problemlos ausgewählt werden.

Die Schleifmischung kann, falls das gewählte Beschichtungsverfahren nicht die Zugabe der einzelnenen Komponenten gestattet, auf einfache, dem Fachmann bekannte Weise durch Mischen der einzelnen Bestandteile, beispielsweise in einer Kugelmühle, hergestellt werden.

Wie vorstehend erwähnt kann das erfindungsgemässe Sägegarn auf einfache Weise hergestellt werden. Die Fasern sind käuflich erhältlich und werden in Form eines Faserstrangs aus 200 bis 1000, vorzugsweise 200-800 Fasern bereitgestellt. Dieser Faserstrang wird anschliessend mit der Schleifmischung beschichtet beziehungsweise gefüllt.

Die Beschichtung und/oder Füllung kann beispielsweise mittels des Schmelzbeschichtungsverfahrens durchgeführt werden. Hierbei wird der zu beschichtende bzw. zu füllende Faserstrang durch eine das Bindeharz umfassende Schmelze gezogen und anschliessend abgekühlt.

Ein anderes Verfahren zur Beschichtung und/oder Füllung der Fasern ist das Nassimprägnierverfahren. Der Faserstrang wird auf einem sogenannten Roving-Gestell bereitgestellt und von diesem mit einer Geschwindigkeit von etwa 300-400 m/min abgewickelt. Die abgewickelten Fasern werden durch ein flüssiges Imprägnierbad gezogen, in welchem neben dem Bindeharz das Schleifmittel sowie gegebenenfalls weitere Additive enthalten sind. Anschliessend muss das Lösungsmittel durch Abdampfen entfernt werden, was durch Aufwärts- und Abwärtsziehen der beschichteten Fasern durch einen "Kühlturm" mit unterschiedlichen Temperaturzonen erfolgt.

Bei einer Alternative dieses Verfahrens wird die abgewickelte Faser mit Hilfe einer Sprühbeschichtungsvorrichtung mit der Schleifmischung überzogen und gefüllt. Aus einer oberhalb der Fasern angeordneten drehbaren Vorrichtung wird die gegebenenfalls unter Druck gelöste Schleifmischung auf die Fasern gesprüht. Unterhalb der zu besprühenden Fasern befindet sich eine Auffangvorrichtung, in welcher die nicht auf die Fasern aufgebrachte Schleifmischung gesammelt und zur erneuten Verwendung der drehbaren Vorrichtung oberhalb der Fasern zugeführt wird. Die Entfernung des Lösungsmittels erfolgt analog zu oben.

Alternativ kann das Beschichten und/oder Füllen der Faserstränge auch durch ein Trockenbeschichtungsverfahren erfolgen. Ein derartiges Verfahren ist beispielsweise in der EP-A-0 680 813 beschrieben, auf deren diesbezüglichen Inhalt hiermit ausdrücklich Bezug genommen wird. Hierbei werden die Faserstränge analog zum Nassimprägnierverfahren von einem Rovinggestell abgewickelt. Vorzugsweise werden sie zunächst mit einer Geschwindigkeit von etwa 400-600 m/min durch eine Vorrichtung geführt, in der sie elektrisch aufgeladen werden. Dadurch wird das Anhaften der Schleifmischung an den Fasern begünstigt. Anschliessend werden sie durch ein Wirbelsinterbad geführt, in welchem sich die fertige Schleifmischung in Pulverform befindet. Durch Löcher im Wannenboden wird Luft oder ein Inertgas in das Wirbelsinterbad hineingeblasen, wodurch ein wallendes Pulverbad entsteht. Das Pulver bleibt an den durch das Wirbelsinterbad gezogenen Fasern haften. Anschliessend werden die so erhaltenen überzogenen Fasern erwärmt. Dies erfolgt vorzugsweise durch Bestrahlung mit infrarotem Licht. Das auf den Fasern befindliche Bindeharz wird hierbei zumindest teilweise verflüssigt, wodurch eine Einstellung der Menge an auf die Fasern aufzutragender Schleifmischung möglich ist. Die Faserstränge können durch weiteres Erhitzen in einem Ofen und anschliessendes Führen durch Kalibrieröffnungen hinsichtlich ihres Aussendurchmessers eingestellt werden.

Gemäss einer in der WO 99/36239 beschriebenen bevorzugten Variante, auf deren diesbezüglichen Inhalt hiermit ausdrücklich Bezug genommen wird, können die einzelnen Komponenten der Schleifmischung im Trockenbeschichtungsverfahren auch ohne vorangehende Compoundierung auf die Faserstränge aufgebracht werden. Hierzu werden die einzelnen Komponenten in das Wirbelsinterbad gebracht. Dort erfolgt ein Mischen beziehungsweise Durchmischen beispielsweise mit Hilfe eines Rotors, Rührers, mit Ultraschall und/oder elektromagnetischen Wellen. Der Mischvorgang muss so durchgeführt werden, dass eine Entmischung der einzelnen Komponenten im Wirbelsinterbad weitgehend verhindert beziehungsweise aufgehoben wird. Die weitere Verarbeitung erfolgt analog zum obigen Trockenbeschichtungsverfahren.

Gemäss der vorliegenden Erfindung kann die äussere Form des Schleifgarns sowie die Verteilung der Schleifpartikel genau eingestellt werden, indem man zunächst in einem ersten Verfahrensschritt gemäss dem vorstehend beschriebenen Trockenbeschichtungsverfahren die Faserstränge nur mit dem Bindeharz oder mit einer Mischung aus Bindeharz und wenig Schleifpartikel überzieht. Das so erhaltene Zwischenprodukt kann anschliessend auf eine bestimmte Dimension kalibriert werden, da das aufgetragene Bindeharz noch nicht ausgehärtet ist. In einem zweiten Verfahrensschritt wird das so erhaltene kalibrierte Zwischenprodukt erneut durch ein Wirbelsinterbad gezogen, welches die Schleifpartikel allein oder in Gegenwart von wenig Bindeharz enthält. Da das auf die Faserstränge aufgetragene Bindeharz noch nicht ausgehärtet und somit feucht ist, können die im zweiten Verfahrensschritt aufgetragenen Schleifpartikel in das Bindeharz eindringen. Durch Variation der. Verfahrensbedingungen kann die Verteilung der Schleifpartikel in der so gebildeten Schleifmischung beeinflusst werden. In der Regel wird aber der grössere Teil der Schleifpartikel bei dem vorstehend beschriebenen zweistufigen Herstellungsverfahren an der Oberfläche des erzeugten Sägegarns verbleiben.

In Zusammenhang mit dem vorstehend beschriebenen Verfahren bedeutet "wenig Bindeharz bzw. Schleifpartikel", dass die entsprechende Komponente im entsprechenden Wirbelsinterbad nur in einer Menge von maximal 5 Gew.-%, bezogen auf die jeweils andere Komponente Bindeharz oder Schleifpartikel, vorhanden ist.

Gemäss einer weiteren Ausführungsform der vorliegenden Erfindung erfolgt die Herstellung des Sägegarns im Torckenbeschichtungsverfahren mit Hilfe eines Zwillings-Fluidbades. Hierbei werden die Faserstränge in das erste Becken des Bads geführt, wo sie mit einem Bindemittel, vorzugsweise einem niederviskosen Bindemittel überzogen werden. Gemäss der vorliegenden Erfindung ist unter einem niederviskosen Bindeharz ein Harz mit einer Viskosität von weniger als 500 mPas, vorzugsweise mit einer Viskosität im Bereich von 100-500 mPas und besonders bevorzugt im Bereich von 100 bis 200 mPas zu verstehen. Anschliessend wird das so beschichtete Garn vorzugsweise senkrecht aus dem Bad herausgeführt, verzwirnt und wieder geschlossen. Über eine Umlenkung wird das beschichtete Garn in das zweite Becken des Zwillings-Fluidbads geführt, wo es wieder zumindest partiell geöffnet wird. Unter einer partiellen Öffnung wird im Sinne der vorliegenden Erfindung eine nicht vollständige Öffnung der Verzwirnung verstanden, wobei jeder Öffnungsgrad zwischen 0 und 100%, vorzugsweise zwischen 50 und 99% umfasst ist. Das Verzwirnen und erneute Öffnen des das Garn bildenden Multi-Filaments kann beispielsweise durch Steuerung der Differentialgeschwindigkeiten an bereitgestellten Umlenkwalzen durchgeführt werden. Im zweiten Becken befindet sich eine Mischung aus Schleifmaterial und wenig Bindemittel. Im zweiten Becken bildet sich vorzugsweise ein stationärer Zustand der Zusammensetzung aus Schleifmaterial und Bindeharz aus, durch welches eine definierte Beschichtung des Multi-Filaments gewährleistet werden kann. Im zweiten Becken erfolgt eine Beschichtung des Garns mit Schleifmaterial und etwas Bindemittel. Das Schleifmaterial verbleibt dabei in der Mehrheit an der Oberfläche des Sägegarns. Bei dieser Verfahrensausgestaltung kommt es jedoch auch zu einem Eintrag des Schleifmaterials in das Innere des Sägegarns, wodurch ein Gradient des Schleifmaterials in der Schleifmischung wie vorstehend beschrieben ausgebildet wird.

In Zusammenhang mit dem vorstehend beschriebenen Verfahren bedeutet "wenig Bindemittel", dass die entsprechende Komponente im entsprechenden Wirbelsinterbad nur in einer Menge von maximal 5 Gew.-%, bezogen auf die Komponente Schleifmaterial, vorhanden ist.

Durch das vorstehend beschriebene Trockenbeschichtungsverfahren können die vorstehend -aufgeführten Bindeharze ohne Einschränkung zur Herstellung der erfindungsgemässen Sägegarne eingesetzt werden. Im Gegensatz dazu können bei der Herstellung von Sägegarnen über Nassbeschichtungsverfahren in Abhängigkeit vom verwendeten Fasermaterial nur bestimmte Bindeharze herangezogen werden.

Mit dem vorstehend beschriebenen Trockenbeschichtungsverfahren, insbesondere dem erfindungsgemässen zweistufigen Herstellungsverfahren, kann die Dimension des zu erzeugenden Sägegarns genau eingestellt werden. Es sind Sägegarne mit nahezu exakter zylindrischer Form herstellbar. Im Gegensatz dazu leiden über daass Nassbeschichtungsverfahren hergestellte Sägegarne unter einer Blasenbildung, die durch die erforderliche Verdampfung des Lösemittels verursacht wird. Auf diese Weise sind daher Sägegarne mit glatter, nahezu exakter zylindrischer Aussenform nicht erhältlich. Die Schnitteigenschaften der erfindungsgemässen Sägegarne sind somit denjenigen von Sägegarnen aus dem Stand der Technik überlegen.

Das erfindungsgemässe Sägegarn kann vorteilhaft zum Schneiden beziehungsweise Teilen von hartspröden Werkstoffen verwendet werden. Das Schneiden kann gemäss einem der hierfür verwendeten Verfahren durchgeführt- werden. Vorteilhafterweise wird hierbei der Werkstoff und das Sägegarn extern mittels eines Kühlmittels wie beispielsweise Wasser gekühlt.

Das erfindungsgemässe Sägegarn eignet sich insbesondere zum Schneiden beziehungsweise Teilen von monokristallinenem Silicium, das gewöhnlich durch das Zonenschmelzverfahren in Form langer Stangen (Ingots) hergestellt wird und für die Halbleiterindustrie in kleine Scheiben (Wafer) geschnitten werden muss. Weiterhin können Materialien wie Silciumcarbid (für die Raumfahrtindustrie), Saphir (für Uhrengläser oder zur Herstellung von Leuchtdioden mit blauem Licht (blue LEDs), Quarz, Smaragd, Rubin, Keramik oder Al₂O₃ geschnitten werden.

Durch Verwendung des erfindungsgemässen Sägegarns kann der Schnittprozess mit Schnittgeschwindigkeiten deutlich unter 1000 m/min durchgeführt werden, ohne dass dies zu Einbussen hinsichtlich der Geschwindigkeit des Arbeitsvorgangs führt. Mit dem erfindungsgemässen Sägegarn können selbst bei geringeren Schnittgeschwindigkeiten höhere Abträge erzielt werden. Die geringere Schnittgeschwindigkeit erlaubt eine höhere Präzision des Arbeitsvorgangs sowie den Einsatz von Materialien, die bei herkömmlichen Schneidewerkzeugen aufgrund der dort beim Schneidevorgang herrschenden hohen Temperaturen nicht eingesetzt werden können.

## Patentansprüche

1. Sägegarn, umfassend eine Schleifmischung enthaltend ein Bindeharz und Schleifmaterial, sowie ein Multi-Filament aus 200 bis 1000 reissfesten Fasern, welche vorzugsweise im wesentlichen parallel zueinander angeordnet und von der Schleifmischung umhüllt sind, wobei der Raum zwischen den Fasern mit der Schleifmischung gefüllt ist, wobei das Bindeharz kein Polytetrafluorethylen enthält.

2. Sägegarn nach Anspruch 1, **dadurch gekennzeichnet, dass** die Menge an Schleifmaterial in der Schleifmischung von der Oberfläche des Schleifgarns zum Inneren hin graduell abnimmt.

3. Sägegarn nach Anspruch 1 oder 2, wobei das Sägegarn eine Dicke von gleich oder weniger als 350 µm aufweist.

4. Sägegarn nach Anspruch 1 oder 2, wobei das Sägegarn eine Dicke von 125-300 µm aufweist.

5. Sägegarn nach einem der Ansprüche 1 bis 4, wobei die Fasern aus einem Material aus der Gruppe, bestehend aus m- und/oder p-Aramid, ultrahochfestem Polyethylen, hochorientiertem Polyester, Polyester, Polyamid, Kohlefasern, p-Polyphenylen-2,6-benzobisoxazol oder Glasfasern oder Kombinationen dieser Materialien, aufgebaut sind.

6. Sägegarn nach Anspruch 5, wobei die Fasern aus m-Aramid, p-Aramid oder ultrahochfestem Polyerhylen aufgebaut sind.

7. Sägegarn nach Anspruch 5, wobei die Fasern aus p-Polyphenylen-2,6-benzobisoxazol aufgebaut sind.

8. Sägegarn nach einem der Ansprüche 1 bis 7, wobei das Bindeharz aus einem thermoplastischen oder duroplastischen Polymer oder einer Kombination dieser Materialien aufgebaut ist.

9. Sägegarn nach Anspruch 8, wobei das Bindeharz aus einem duroplastischen Polymer aufgebaut ist.

10. Sägegarn nach Anspruch 9, wobei das duroplastische Polymer aus der Gruppe, bestehend aus härtbaren Phenolharzen, Epoxidharzen, härtbaren Phenol-Formaldehyd-Harzen, MF-Formmassen und härtbaren Melamin-Phenol-Formaldehyd-(MPF)-Formmassen oder einer Kombination dieser Materialien, ausgewählt ist.

11. Sägegarn nach Anspruch 8, wobei das Bindeharz aus einem thermoplastischen Polymer, ausgewählt aus der Gruppe bestehend aus Polyimiden, Polyamiden und Polyetheretherketonen aufgebaut ist.

12. Sägegarn nach einem der Ansprüche 1 bis 11, wobei das Schleifmaterial aus der Gruppe, bestehend aus feinklassiertem Diamant, Siliciumcarbid (SiC), Al₂O₃, kubischem Bornitrid (c-BN), TiC, ZrC, HfC, Gemischem aus diesen Carbiden, TiN, ZrN, HfN, oder Gemischem aus diesen Nitriden, oder einer Kombination dieser Materialien, ausgewählt ist.

13. Sägegarn nach Anspruch 12, wobei das Schleifmaterial feinklassierter Diamant ist.

14. Verfahren zur Herstellung eines Sägegarns nach einem der Ansprüche 1 bis 13, umfassend die Schritte
a) Bereitstellung eines Multifilaments aus reissfesten Fasern
b) Beschichten bzw. Füllen dieses Multi-Filaments mit einer Schleifmischung, umfassend ein Bindeharz und Schleifmaterial, und
c) Weitere Verarbeitung des so erhaltenen Multi-Filaments.

15. Verfahren nach Anspruch 14, wobei das Beschichten bzw. Füllen im Schritt b) durch ein Nassimprägnierverfahren oder ein Trockenbeschichtungsverfahren erfolgt.

16. Verfahren nach Anspruch 15, wobei der Schritt b) mit einem Trockenbeschichtungsverfahren durch Ziehen des Multi-Filaments durch eine Wirbelschicht durchgeführt wird.

17. Verfahren nach Anspruch 16, wobei der Schritt b) in einem zweistufigen Prozess zunächst durch Ziehen des Multi-Filaments durch eine Wirbelschicht, enthaltend Bindeharz und wenig oder keine Schleifpartikel, und nach anschliessender Kalibrierung erneut durch Ziehen durch eine Wirbelschicht, enthalten Schleifpartikel und wenig oder kein Bindeharz, ausgeführt wird.

18. Verfahren nach Anspruch 16, wobei der Schritt b) in einem Zwillings-Fluidbad ausgeführt wird, umfassend das Durchführen des Multi-Filaments durch ein erstes Becken, enthaltend Bindeharz, sowie Überführen des Multi-Filaments in ein zweites Becken, enthaltend Schleifmaterial und wenig Bindeharz.

19. Verfahren nach Anspruch 18, wobei das Multi-Filament senkrecht aus dem ersten Becken herausgeführt, verzwirnt, umgelenkt, zumindest partiell geöffnet und anschliessend in das zweite Becken geführt wird.

20. Verwendung eines Sägegarns gemäss einem der Ansprüche 1 bis 13 zum Schneiden von hartspröden Werkstoffen.

21. Verwendung nach Anspruch 20, wobei das hartspröde Material aus der Gruppe, bestehend aus monokristallinenem Silicium, Silciumcarbid, Saphir, Quarz, Smaragd, Rubin, Keramik oder Al₂O₃, ausgewählt ist.

## Claims

1. Sawing yarn comprising an abrasive mixture containing a bonding resin and abrasive material, and a multifilament of 200 to 1000 fibers which have high tensile strength and are preferably arranged substantially parallel to one another and surrounded by the abrasive mixture, the space between the fibers being filled with the abrasive mixture, wherein the bonding resin contains no polytetrafluoroethylene.

2. Sawing yarn according to Claim 1, **characterized in that** the amount of abrasive material in the abrasive mixture decreases gradually from the surface of the abrasive yarn to the interior.

3. Sawing yarn according to Claim 1 or 2, having a thickness equal to or less than 350 µm.

4. Sawing yarn according to Claim 1 or 2, having a thickness of 125-300 µm.

5. Sawing yarn according to any of Claims 1 to 4, wherein the fibers are composed of a material from the group consisting of m- and/or p-aramid, ultra-high-strength polyethylene, highly oriented polyester, polyester, polyamide, carbon fibers, p-polyphenylene-2,6-benzobisoxazole or glass fibers or combinations of these materials.

6. Sawing yarn according to Claim 5, wherein the fibers are composed of m-aramid, p-aramid or ultra-high-strength polyethylene.

7. Sawing yarn according to Claim 5, wherein the fibers are composed of p-polyphenylene-2,6-benzobisoxazole.

8. Sawing yarn according to any of Claims 1 to 7, wherein the bonding resin is composed of a thermoplastic or thermosetting polymer or a combination of these materials.

9. Sawing yarn according to Claim 8, wherein the bonding resin is composed of a thermosetting polymer.

10. Sawing yarn according to Claim 9, wherein the thermosetting polymer is selected from the group consisting of curable phenol resins, epoxy resins, curable phenol/formaldehyde resins, MF molding materials and curable melamine/phenol/ formaldehyde (MPF) molding materials or a combination of these materials.

11. Sawing yarn according to Claim 8, wherein the bonding resin is composed of a thermoplastic polymer selected from the group consisting of polyimides, polyamides and polyether ether ketones.

12. Sawing yarn according to any of Claims 1 to 11, wherein the abrasive material is selected from the group consisting of finely classified diamond, silicon carbide (SiC), Al₂O₃, cubic boron nitride (c-BN), TiC, ZrC, HfC, mixtures of these carbides, TiN, ZrN, HfN or mixtures of these nitrides, or a combination of these materials.

13. Sawing yarn according to Claim 12, wherein the abrasive material is finely classified diamond.

14. Method for the production of a sawing yarn according to any of Claims 1 to 13, comprising the steps of
a) preparation of a multifilament of fibers having high tensile strength,
b) coating or filling of this multifilament with an abrasive mixture comprising a bonding resin and abrasive material, and
c) further processing of the multifilament thus obtained.

15. Method according to Claim 14, wherein the coating or filling in step b) is effected by a wet impregnation method or a dry coating method.

16. Method according to Claim 15, wherein step b) is carried out by a dry coating method by drawing the multifilament through a fluidized bed.

17. Method according to Claim 16, wherein step b) is carried out in a two-stage process, first by drawing the multifilament through a fluidized bed containing bonding resin and a small amount of abrasive particles or no abrasive particles and, after subsequent sizing, again by drawing through a fluidized bed containing abrasive particles and a small amount of bonding resin or no bonding resin.

18. Method according to Claim 16, wherein step b) is carried out in a twin fluid bath, comprising passing the multifilament through a first tank, containing bonding resin, and transferring the multifilament to a second tank, containing abrasive material and a small amount of bonding resin.

19. Method according to Claim 18, wherein the multifilament is removed vertically from the first tank, twisted, deflected, at least partly opened and then fed into the second tank.

20. Use of a sawing yarn according to any of Claims 1 to 13 for cutting hard brittle materials.

21. Use according to Claim 20, wherein the hard brittle material are selected from the group consisting of single silicon crystals, silicon carbide, sapphire, quartz, emerald, ruby, ceramic or Al₂O₃.

## Revendications

1. Fil de scie comprenant un mélange abrasif qui contient une résine de liant, un matériau abrasif un multi-filament constitué de 200 à 1 000 fibres résistant à la déchirure, disposées de préférence essentiellement parallèlement les unes aux autres et englobées par le mélange abrasif,
l'espace compris entre les fibres étant rempli du mélange abrasif et
la résine de liant ne contenant pas de polytétrafluoroéthylène.

2. Fil de scie selon la revendication 1, **caractérisé en ce que** la quantité de matériau abrasif présente dans le mélange abrasif diminue progressivement vers l'intérieur depuis la surface de fils abrasifs.

3. Fil de scie selon les revendications 1 ou 2, dans lequel le fil de scie présente une épaisseur égale ou inférieure à 350 µm.

4. Fil de scie selon les revendications 1 ou 2, dans lequel le fil de scie a une épaisseur de 125 à 300 µm.

5. Fil de scie selon l'une des revendications 1 à 4, dans lequel les fibres sont constituées d'un matériau sélectionné dans l'ensemble constitué du m- et/ou du p-aramide, du polyéthylène à résistance ultra-haute, du polyester fortement orienté, du polyester, du polyamide, des fibres de carbone, du p-polyphénylène-2,6-benzobisoxazole, des fibres de verre ou de combinaisons de ces matériaux.

6. Fil de scie selon la revendication 5, dans lequel les fibres sont constituées de m-aramide, de p-aramide ou de polyéthylène à résistance ultra-haute.

7. Fil de scie selon la revendication 5, dans lequel les fibres sont constituées de p-polyphényléne-2,6-benzobisoxazole.

8. Fil de scie selon l'une des revendications 1 à 7, dans lequel la résine de liant est constituée d'un polymère thermoplastique, d'un polymère thermodurcissable ou d'une combinaison de ces matériaux.

9. Fil de scie selon la revendication 8, dans lequel la résine de liant est constituée d'un polymère thermodurcissable.

10. Fil de scie selon la revendication 9, dans lequel le polymère thermodurcissable est sélectionné dans l'ensemble constitué des résines de phénol durcissables, des résines d'époxy durcissables, des résines de phénol et de formaldéhyde durcissables, des pâtes de moulage MF, des pâtes de moulage durcissables en mélamine-phénol-formaldéhyde (MPF) ou d'une combinaison de ces matériaux.

11. Fil de scie selon la revendication 8, dans lequel la résine de liant est constituée d'un polymère thermoplastique sélectionné dans l'ensemble constitué des polyimides, des polyamides et des polyétheréthercétones.

12. Fil de scie selon l'une quelconque des revendications des revendications 1 à 11, dans lequel le matériau abrasif est sélectionné dans l'ensemble constitué du diamant, du carbure de silicium (SiC), de l'Al₂O₃, du boronitrure cubique (c-BN), du TiC, du ZrC, du HfC, tous en fines particules, des mélanges de ces carbures, du TiN, du ZrN, du HfN, des mélanges de ces nitrures et des combinaisons de ces matériaux.

13. Fil de scie selon la revendication 12, dans lequel le matériau abrasif est un diamant en fines particules.

14. Procédé de fabrication d'un fil de scie selon l'une des revendications 1 à 13, qui comprend les étapes qui consistent à :
a) préparer un multi-filament en fibres résistant à la dé chirure,
b) revêtir ou charger ce multi-filament d'un mélange abra sif qui comprend une résine de liant et un matériau abrasif et
c) poursuivre le traitement du multi-filament ainsi obtenu.

15. Procédé selon la revendication 14, dans lequel le revêtement ou le chargement de l'étape b) s'effectuent par un procédé d'imprégnation à l'état humide ou un procédé de revêtement à sec.

16. Procédé selon la revendication 15, dans lequel l'étape b) est réalisée dans un procédé de revêtement à sec en tirant le multi-filament à travers un lit fluidisé.

17. Procédé selon la revendication 16, dans lequel l'étape b) est réalisée dans une opération en deux étapes, d'abord en tirant le multi-filament à travers un lit fluidisé qui contient une résine de liant et peu ou pas de particules abrasives, et après calibration, en le tirant de nouveau dans un lit fluidisé qui contient des particules abrasives et peu ou pas de résine de liant.

18. Procédé selon la revendication 16, dans lequel l'étape b) est réalisée dans un double bain de fluide, et comprend les étapes qui consistent à faire passer le multi-filament dans un premier bassin qui contient une résine de liant et à transférer ensuite le multi-filament dans un deuxième bassin qui contient le matériau abrasif et peu de résine de liant.

19. Procédé selon la revendication 18, dans lequel le multi-filament est extrait verticalement du premier bassin, est torsadé, dévié, ouvert au moins en partie et ensuite amené dans le deuxième bassin.

20. Utilisation d'un fil de scie selon l'une des revendications 1 à 13 pour la découpe de matériaux durs et fragiles.

21. Utilisation selon la revendication 20, dans laquelle le matériau dur et fragile est sélectionné dans l'ensemble constitué du silicium monocristallin, du carbure de silicium, du saphir, du quartz, de la smaragdine, du rubis, de la céramique et de l'Al₂O₃.
